# EUROPEAN PATENT SPECIFICATION

(11) **EP 1 356 997 B1**
(45) Date of publication and mention of the grant of the patent: **03.02.2010**
(21) Application number: 03252575.0
(22) Date of filing: 24.04.2003
(51) Int. Cl.: B60R 16/02, H02G 5/06

(54) **Vehicle component having an electrical conductor adhesively secured into the component**
Fahrzeugkomponent die einen klebenden elektrischen Leiter beinhaltet
Composant d'un véhicule ayant un conducteur électrique fixé de manière adhésive à ce composant

(30) Priority: 25.04.2002 US 375754 P; 23.04.2003 US 422032
(43) Date of publication of application: 29.10.2003
(73) Proprietor: Siemens VDO Automotive Inc., Chatham, Ontario N7M 5M7 (CA)
(72) Inventor: Stuart, Phillip Edward Arthur, Chantham, Ontario N7M 1Y9 (CA)
(74) Representative: Bongen, Renaud & Partner

(56) References cited:
- EP-A- 0 675 567
- DE-A- 3 936 906
- DE-A- 19 929 754
- US-A1- 2002 027 784

## Description

### BACKGROUND OF THE INVENTION

A variety of devices on vehicles require electrical power and electrical signals for proper operation. Accordingly, there are many electrical conductors strategically positioned to provide proper connectivity with the various components requiring electricity. One challenge facing modern vehicle suppliers and designers is how to effectively and economically integrate an ever-increasing number of electrical conductors into vehicle systems.

A typical approach includes using wiring harnesses that route wires to desired locations on a vehicle. In many instances, wiring harnesses must be routed around vehicle components so that appropriate connections can be made. The position of some devices requiring an electrical connection makes such routing difficult in many instances. One attempted solution has been to secure a portion of electrical conductors to an exterior or exposed interior surface of a housing of a component associated with the device requiring the electrical connection. Another approach has been to attempt to secure the connector to such a housing during a moulding process.

The disadvantage to the exterior connection approach is that it is expensive, operator intensive and does not necessarily provide a secure connection to the device of interest. A significant drawback of the attempt to mould wiring into the component housing is the relatively high scrap rate as a result of moulding problems. Additionally, the moulding technique is operator intensive, which increases the financial cost of manufacture. Further, when an otherwise plastic component has electrical conductors moulded into it, then recycling of the component becomes difficult.

There is a need for an improved way of associating electrical conductors with vehicle component housings. This invention addresses that need.

The document DE 39 36 906 A discloses the preamble of claims 1 and 8.

### SUMMARY OF THE INVENTION

In general terms, this invention provides a vehicle component having at least one electrical conductor adhesively secured into the component.

Accordingly, the present invention provides apparatus and methods as recited in the appended claims.

In a particular example, the adhesive is applied around the conductor which is then placed between the first and second portions. As they are moved into position against each other and as the adhesive cures, they become held together by the adhesive.

In one example, at least one electrical connector is supported by one of the component portions and then glued into place by the same adhesive used to secure the component portions together. In one example, the connector includes a tong that makes a conductive connection with the portion of the connector in the housing.

In one example, the same adhesive is used to secure the conductor in place and to secure the first and second component portions together.

The various features and advantages of this invention will become apparent to those skilled in the art from the following detailed description of certain embodiments, given by way of examples only. The drawings that accompany the detailed description can be briefly described as follows.

### BRIEF DESCRIPTION OF THE DRAWINGS

Figure 1 schematically illustrates an example vehicle component having an electrical conductor integrated into the component according to this invention.

Figure 2 schematically illustrates an example method of assembling a vehicle component designed according to this invention.

Figure 3 schematically illustrates another example assembly having an electrical connector supplied by the housing of the component.

Figure 4 is an exploded, perspective view schematically showing another example component assembly designed according to this invention.

Figure 5 is an exploded, perspective view schematically showing another example component assembly designed according to this invention.

### DETAILED DESCRIPTION OF CERTAIN EMBODIMENTS

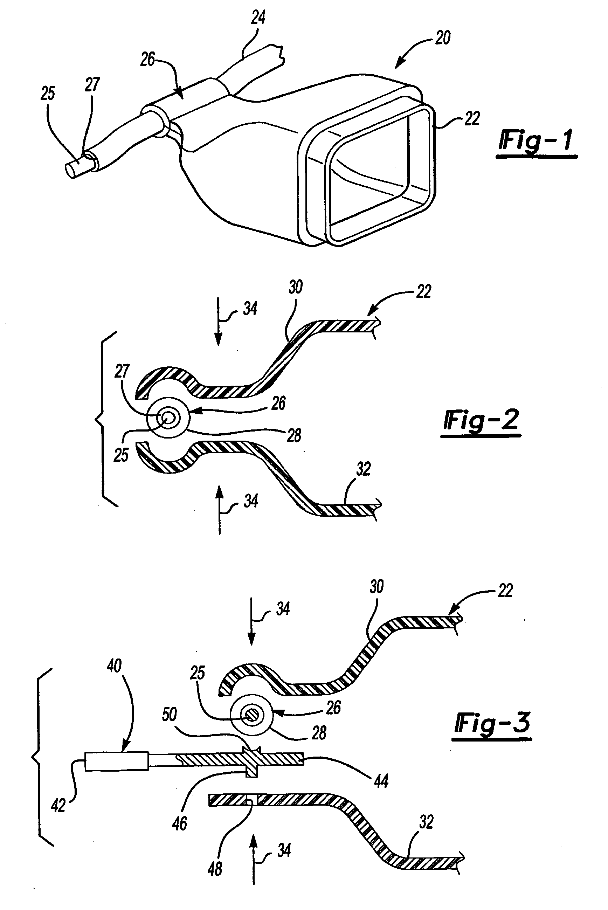

An air intake manifold assembly 20 is schematically shown in Figures 1 and 2. The assembly 20 includes a manifold body 22, which is generally configured in a conventional manner to operate as required for the air intake system of a vehicle. An air intake manifold is shown as an example vehicle component. This invention is not limited to air intake manifolds and those skilled in the art who have the benefit of this description will realise the applicability of this invention for various vehicle components such as an air filter housing or an acoustic cover attachment.

A wiring harness 24 includes at least one electrical conductor 25. In the illustrated example, a portion 26 of the wire harness 24 is adhesively secured in a selected position within the component body 22. As best seen in Figure 2, an insulation layer 27 surrounds the conductor 25. A layer of adhesive 28 encapsulates the insulation layer 27.

In another example, the conductor 25 does not have an exterior insulation layer 27. In such an example, the adhesive 28 preferably has some electrical insulating properties so that appropriate insulation is achieved. Depending on the particular wire harness arrangement and the particular materials of the vehicle component housing, those skilled in the art will be able to select from among commercially available adhesives to meet the needs of a particular situation.

As best appreciated from Figure 2, the air intake manifold body 22 has a first portion 30 and a second portion 32. The first and second portions are moulded in one example using conventional moulding techniques and a commercially available plastic material. The wire harness 24 is positioned relative to the first and second portions so that the desired portion 26 is between the first portion 30 and the second portion 32 of the component body 22. As schematically illustrated by the arrows 34 in Figure 2, the first portion 30 and second portion 32 are brought into contact with each other and held in place until the adhesive 28 secures them together. At the same time, the wire harness 24 is secured in place within the appropriate position within the component body 22.

In some examples, the component portions 30 and 32 will be held together by the adhesive 28. In some situations, an additional securing member holds the pieces together in addition to the adhesive 28. Example securing members include screws, rivets, bolts and locking tabs. Depending on the particular vehicle component, those skilled in the art who have the benefit of this description will realise and be able to select from among conventional securing techniques to use in conjunction with an adhesive associated with the conductor 25 to meet the needs of a particular situation.

The inventive approach allows for conveniently, economically and securely positioning at least a portion 26 of a wire harness 24 in a selected position within a vehicle component body.

In one example, the adhesive 28 encapsulates the appropriate portion 26 of the wire harness 24. In another example, the adhesive 28 is applied to one of the component body portions 30 or 32 and the wire harness is placed onto the adhesive. A variety of adhesives may be used.

This invention provides a variety of advantages including the ability to check the integrity of the wire harness before installation. Connectors for making electrical connection between the wire harness and the devices that require electrical power can be pre-attached and fit into receptacles on the component housing portions, which provides stable connection points. Some devices may be directly attached to the harness before installation into the vehicle component body, which reduces connection joints and introduces further economies during the assembly process. In instances where insulation around a conductor can be eliminated, material savings may be realised.

Another advantage that is realised in some examples is that the adhesive can be dissolved or otherwise treated to separate the component portions to make repairs or replacements to the wire harness or an appropriate portion of the component. This provides possible material and part savings and can simplify a repair procedure.

Figure 3 shows one example arrangement that is a modification of the embodiment shown in Figure 2. In this example, a connector 40 includes a receptacle 42 that houses male or female connecting elements as needed for a given situation. The connector 40 has a conductive body portion 44 that is received against the wire harness within the component 20. A positioner 46 is adapted to fit within a receiver (i.e., an opening) 48 on the portion 32 of the component 20.

As the portions 30 and 32 are brought together, the adhesive 28 secures the wire harness portion 26 in place between the component portions. At the same time, a tong 50 on the conductive body portion 40 makes an electrically conductive connection with the conductor 25. In one example, the tong 50 pierces through the insulation layer 27 and contacts the conductor 25.

An embodiment of this invention incorporating such a connector and assembly strategy provides the advantages of minimising the number of physical connector pieces coupled to the wire harness to achieve a desired number of connections and simplifies the wire harness construction.

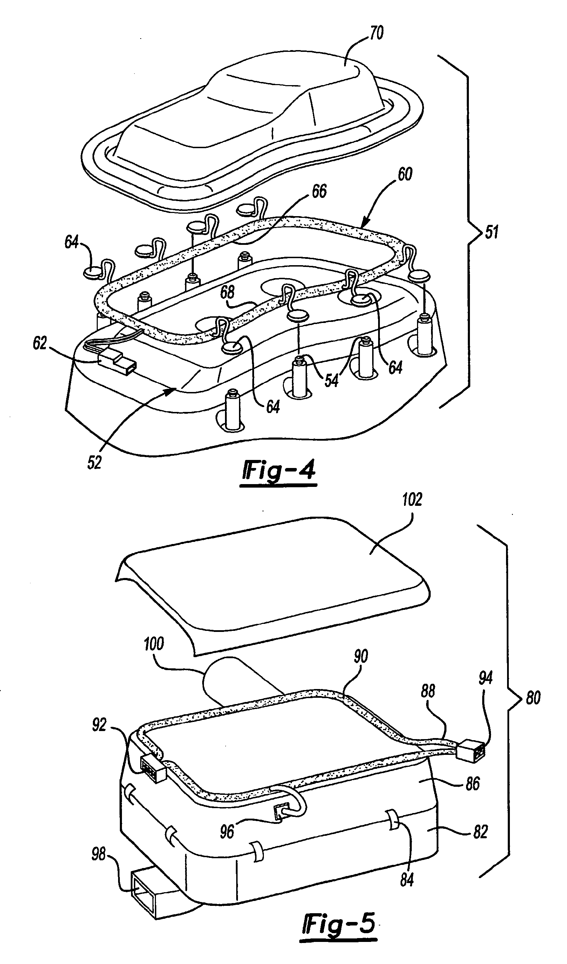

Figure 4 schematically shows another example where a manifold 52 supports a plurality of serviceable devices 54 such as fuel injectors, for example. A wire harness 60 has a connector 62 at one end. A plurality of loose connectors 64, which are like the connector 40 in one example, are for making electrical connections between the wire harness 60 and the serviceable devices 54. The conductive wires 66 of the wire harness are encapsulated in an adhesive 68.

A decorative trim cover 70 is secured in place adjacent the manifold 52 by the adhesive 68 when the wire harness 60, manifold 52 and trim cover 70 are brought together and the adhesive 68 sets or is allowed to cure.

Figure 5 shows another example implementation of this invention. In this example, an air filter assembly 80 includes a housing base 82 that is clipped by clips 84 to another portion 86 in a conventional manner. A wire harness 88 includes an adhesive 90 over a substantial portion. Connectors 92 and 94 facilitate making electrically conductive connections with other wire harnesses or devices associated with the vehicle on which the air filter assembly 80 is provided. A sensor connector 96 facilitates making a connection with a sensor (not illustrated) associated with the filter.

Ducts 98 and 100 allow unfiltered air to flow into, through and out of the filter assembly 80. A decorative trim cover 102 is secured in place on the assembly by the adhesive 90 that also secures the wire harness in place between the cover 102 and the portion 86.

At the end of the working life of the components 20, 51, 80, the wiring harnesses 24, 60, 90 may be pulled away from the remainder of the components, enabling the plastic parts of the components to be sent for recycling, possibly also allowing some recycling of the wiring harnesses, for example by the recovery of copper.

The scope of legal protection given to this invention can only be determined by studying the following claims.

## Claims

1. A method of assembling a vehicle component (20), comprising the steps of: securing at least a portion (26) of at least one conductor (25) to at least a first portion (30) of the component, using an adhesive layer (28); and securing a second portion (32) of the component to the first portion (30) with the portion (26) of the conductor between the first (30) and second portions (32) of the component, **characterised in that** the adhesive layer (28) used to secure the conductor (25) to the first portion (30) is also used to secure the second portion (32) to the first portion (30) of the component.

2. The method of claim 1, including using an electrically insulation adhesive to secure the conductor to at least the first portion (30).

3. The method of any preceding claim, including securing at least a portion (44) of at least one connector member (40) between the first (30) and second (32) portions and making an electrically conductive connection (50) between the connector member (40) and the conductor (25).

4. The method of any preceding claim, including encapsulating at least a portion of the conductor (25) in the adhesive layer (28) and placing the adhesive in contact with at least the first portion (30).

5. The method of claim 4, including placing the second portion (32) against the first portion (30) and the adhesive layer (28) .

6. The method of any preceding claim, including applying the adhesive layer (28) to the first portion (30), placing at least a portion (26) of the conductor (25) in contact with the adhesive layer and placing the second portion (32) in contact with the first portion.

7. The method of any preceding claim, including subsequently curing the adhesive layer.

8. A vehicle component, comprising:
a body (20) having a first portion (30) secured to a second portion (32);
at least one electrical conductor (25) positioned at least partially (26) between the first and second body portions; and
an adhesive layer (28) securing the conductor to at least one of the body portions;
**characterised in that** the adhesive layer used to secure the conductor (25) to the first portion (30) is also used to secure the first portion (30) to the second portion (36).

9. The component of claim 8, wherein the adhesive layer surrounds the conductor.

10. The component of any claims 8 or 9, wherein the adhesive layer is electrically insulating.

11. The component of any of claims 8 - 10, wherein the body comprises an air inlet manifold.

12. The component of any o claims 8 - 11, wherein the conductor comprises a wire harness.

13. The component of any of claims 8 - 12; including at least one connector (40) in conductive contact with the conductor, the connector having a portion (44) secured between the body portions.

14. The component of claim 13, wherein the connector includes a tong portion (50) that contacts the conductor.

15. The component of claim 13 or 14, wherein the connector includes a positioner (46) and least one of the body portions has a receiver (48) that receives the positioner.

## Patentansprüche

1. Verfahren des Zusammenbauens einer Fahrzeugkomponente (20), das folgende Schritte umfasst: Befestigen mindestens eines Abschnitts (26) mindestens eines Leiters (25) an mindestens einem ersten Abschnitt (30) der Komponente unter Verwendung einer Klebstoffschicht (28) und Befestigen eines zweiten Abschnitts (32) der Komponente am ersten Abschnitt (30) mit dem Abschnitt (26) des Leiters zwischen den ersten (30) und zweiten Abschnitten (32) der Komponente, **dadurch gekennzeichnet, dass** die Klebstoffschicht (28), die verwendet wird, um den Leiter (25) am ersten Abschnitt (30) zu befestigen, auch verwendet wird, um den zweiten Abschnitt (32) am ersten Abschnitt (30) der Komponente zu befestigen.

2. Verfahren nach Anspruch 1, welches das Verwenden eines elektrisch isolierenden Klebstoffs beinhaltet, um den Leiter an mindestens dem ersten Abschnitt (30) zu befestigen.

3. Verfahren nach irgendeinem vorhergehenden Anspruch, welches das Befestigen mindestens eines Abschnitts (44) mindestens eines Verbinderelements (40) zwischen den ersten (30) und zweiten (32) Abschnitten und das Herstellen einer elektrisch leitfähigen Verbindung (50) zwischen dem Verbinderelement (40) und dem Leiter (25) beinhaltet.

4. Verfahren nach irgendeinem vorhergehenden Anspruch, welches das Kapseln mindestens eines Abschnitts des Leiters (25) in der Klebstoffschicht (28) und das Platzieren des Klebstoffs in Berührung mit mindestens dem ersten Abschnitt (30) beinhaltet.

5. Verfahren nach Anspruch 4, welches das Platzieren des zweiten Abschnitts (32) gegen den ersten Abschnitt (30) und die Klebstoffschicht (28) beinhaltet.

6. Verfahren nach irgendeinem vorhergehenden Anspruch, welches das Aufbringen der Klebstoffschicht (28) auf den ersten Abschnitt (30), das Platzieren mindestens eines Abschnitts (26) des Leiters (25) in Berührung mit der Klebstoffschicht und das Platzieren des zweiten Abschnitts (32) in Berührung mit dem ersten Abschnitt beinhaltet.

7. Verfahren nach irgendeinem vorhergehenden Anspruch, welches das darauf folgende Aushärten der Klebstoffschicht beinhaltet.

8. Fahrzeugkomponente, die Folgendes umfasst:
einen Körper (20), der einen ersten Abschnitt (30) aufweist, der an einem zweiten Abschnitt (32) befestigt ist;
mindestens einen elektrischen Leiter (25), der mindestens teilweise (26) zwischen den ersten und zweiten Körperabschnitten angeordnet ist; und
eine Klebstoffschicht (28), welche den Leiter an mindestens einem der Körperabschnitte befestigt;
**dadurch gekennzeichnet, dass** die Klebstoffschicht, die verwendet wird, um den Leiter (25) am ersten Abschnitt (30) zu befestigen, auch verwendet wird, um den ersten Abschnitt (30) am zweiten Abschnitt (32) zu befestigen.

9. Komponente nach Anspruch 8, wobei die Klebstoffschicht den Leiter umgibt.

10. Komponente nach irgendeinem der Ansprüche 8 oder 9, wobei die Klebstoffschicht elektrisch isolierend ist.

11. Komponente nach irgendeinem der Ansprüche 8-10, wobei der Körper einen Luftansaugkrümmer umfasst.

12. Komponente nach irgendeinem der Ansprüche 8-11, wobei der Leiter einen Leitungssatz umfasst.

13. Komponente nach irgendeinem der Ansprüche 8-12, die mindestens einen Verbinder (40) in leitfähigem Kontakt mit dem Leiter beinhaltet, wobei der Verbinder einen Abschnitt (44) aufweist, der zwischen den Körperabschnitten befestigt ist.

14. Komponente nach Anspruch 13, wobei der Verbinder einen Zangenabschnitt (50) beinhaltet, der den Leiter berührt.

15. Komponente nach Anspruch 13 oder 14 wobei der Verbinder einen Positionierer (46) beinhaltet und mindestens einer der Körperabschnitte eine Aufnahme (48) aufweist, die den Positionierer aufnimmt.

## Revendications

1. Procédé d'assemblage d'un composant de véhicule (20), comprenant les étapes consistant à : fixer au moins une portion (26) d'au moins un conducteur (25) à au moins une première portion (30) du composant, en utilisant une couche d'adhésif (28) ; et fixer une seconde portion (32) du composant à la première portion (30), la portion (26) du conducteur se trouvant entre la première (30) et la seconde portions (32) du composant, **caractérisé en ce que** la couche d'adhésif (28) utilisée pour fixer le conducteur (25) à la première portion (30) est aussi utilisé pour fixer la seconde portion (32) à la première portion (30) du composant.

2. Procédé selon la revendication 1, incluant d'utiliser un adhésif électriquement isolant afin de fixer le conducteur à au moins la première portion (30).

3. Procédé selon une quelconque des revendications précédentes, incluant de fixer au moins une portion (44) d'au moins un élément connecteur (40) entre la première (30) et la seconde (32) potions et réaliser une connexion électriquement conductrice (50) entre l'élément connecteur (40) et le conducteur (25).

4. Procédé selon une quelconque des revendications précédentes, incluant d'encapsuler au moins une portion du conducteur (25) dans la couche d'adhésif (28) et placer la couche l'adhésif en contact avec au moins la première portion (30).

5. Procédé selon la revendication 4, incluant de placer la seconde portion (32) contre la première portion (30) et la couche d'adhésif (28).

6. Procédé selon une quelconque des revendications précédentes, incluant d'appliquer la couche d'adhésif (28) à la première portion (30), placer au moins une portion (26) du conducteur (25) en contact avec la couche d'adhésif et placer la seconde portion (32) en contact avec la première portion.

7. Procédé selon une quelconque des revendications précédentes, incluant de durcir postérieurement la couche d'adhésif.

8. Composant de véhicule, comprenant :
un corps (30) ayant une première portion (30) fixée à une seconde portion (32) ;
au moins un conducteur électrique (25) positionné au moins partiellement (26) entre la première et la seconde portions de corps ; et
une couche d'adhésif (28) fixant le conducteur à au moins une des portions de corps ;
**caractérisé en ce que** la couche d'adhésif utilisée pour fixer le conducteur (25) à la première portion (30) est aussi utilisée pour fixer la première portion (30) à la seconde portion (32).

9. Composant selon la revendication 8, dans lequel la couche d'adhésif entoure le conducteur.

10. Composant selon une quelconque des revendications 8 ou 9, dans lequel la couche d'adhésif est électriquement isolante.

11. Composant selon une quelconque des revendications 8 à 10, dans lequel le corps comprend un collecteur d'admission d'air.

12. Composant selon une quelconque des revendications 8 à 11, dans lequel le conducteur comprend un faisceau de câblage.

13. Composant selon une quelconque des revendications 8 à 12, incluant au moins un connecteur (40) en contact conducteur avec le conducteur, le connecteur ayant une portion (44) fixée entre les portions de corps.

14. Composant selon la revendication 13, dans lequel le connecteur inclut une portion de préhension (50) qui contacte le conducteur.

15. Composant selon la revendication 13 ou 14, dans lequel le connecteur inclut une butée de positionnement (46) et au moins une des portions de corps comporte un récepteur (48) qui reçoit la butée de positionnement.
